# EUROPEAN PATENT SPECIFICATION

(11) **EP 4 274 693 B1**
(45) Date of publication and mention of the grant of the patent: **11.06.2025**
(21) Application number: 22797847.5
(22) Date of filing: 05.10.2022
(51) Int. Cl.: B22D 11/041, B22D 11/049, B22D 11/055, B22D 11/057, B22D 11/059

(54) **CRYSTALLIZER FOR CONTINUOUS CASTING**
KRISTALLISATOR ZUM STRANGGIESSEN
LINGOTIÈRE POUR LA COULÉE CONTINUE

(30) Priority: 06.10.2021 IT 202100026519
(43) Date of publication of application: 15.11.2023
(73) Proprietor: Danieli & C. Officine Meccaniche S.p.A., 33042 Buttrio (IT)
(72) Inventor: DE LUCA, Andrea, 33047 Remanzacco (IT); BAZZARO, Gianluca, 33033 Codroipo (IT); ENTESANO, Luca, 33100 Udine (IT); POPOV, Andrii, 33100 Udine (IT); TORTUL, Federico, 34072 Gradisca D'Isonzo (IT)
(74) Representative: Celona, Antonio
(86) International application number: PCT/IB2022/059496
(87) International publication number: WO 2023/057917

(56) References cited:
- EP-B1- 3 013 498
- WO-A1-2015/107511
- US-B2- 7 422 049

## Description

### Field of the invention

The present invention relates to a crystallizer for continuous casting, usable in the iron and steel industry to cast billets, blooms, or other similar products of any type and cross-section.

### Background art

Crystallizers are the fundamental components of the continuous casting process of molten metal, e.g., steel. They are where the solidification process of liquid steel begins and undergo significant thermal stresses (which increase as a function of productivity) because they have the task of extracting a large amount of heat (both latent and sensible) from the cast product.

Long products can have different sections, e.g., square, rectangular, round, or polygonal sections, either regular or not regular, with a preferably even number of sides that is a multiple of four, although an octagonal section is one of the preferred sections. These are the shapes assumed at least by the interior face of the crystallizer wall.

The interaction between the steel, which is solidifying, and the copper with which the wall of the crystallizer is made takes place inside the crystallizer. The state of contact between the two materials affects the amount of heat removeable and the surface quality of the cast product.

It is known that steel undergoes a dimensional contraction, called shrinkage, when it changes phase and solidifies. The crystallizer must accommodate this shrinkage and ensure a uniform contact as far as possible with the transiting steel both in the perimetric direction and along its entire length; for this reason, its cross-sectional area decreases proceeding from the inlet towards the outlet. Different types of steel, as well as different casting speeds, imply different amounts of shrinkage. The law by which the internal dimensions of the crystallizer decrease is called taper and its determination is based mainly on empirical methods. The taper is set on the crystallizer during its production by means of plastic deformation machining (drilling by means of a mandrel) or by chip removal. The choice of taper profile is of primary importance because it cannot be changed in operation to adapt to the changing process conditions. Therefore, it is apparent that the taper must be a compromise between opposite requirements to guarantee casting process flexibility in terms of both the range of steels produced and the casting speed.

At present, several types of crystallizers for continuous casting suited for casting billets, blooms or other steel products are known, each having a prismatic or cylindrical body provided with a longitudinal through cavity, provided with a cross-section corresponding to the cross-section of the product to be cast and in which liquid casting metal is suited to pass.

In particular, the various known types of crystallizers include:
- monolithic crystallizers (made in one piece), i.e., crystallizers with a round cross-section, or with a seamless cross-section between the sides of the polygon which form at least the cross-section of the inner face of the crystallizer wall;
- plate crystallizers, i.e., crystallizers in which the sides of the aforesaid polygon have devices (usually bolts variously arranged in the casting direction) which form the mutual connection.

Crystallizers for products with a round cross-section are only monolithic; those for products with a polygonal cross-section can belong to both categories. However, it is current practice to choose plate crystallizers in the case of a non-regular polygonal section, e.g., in the case of a rectangular section corresponding to the product called bloom.

Both types of crystallizers can be provided with cooling channels which are made in the tubular body in the longitudinal direction and can be obtained by drilling, and in this case said cooling channels are positioned within the thickness of the wall, or by milling to occupy a position on the outer surface of the crystallizer wall.

In known examples of crystallizers with longitudinal cooling channels obtained by milling, said channels are placed on the outer face or on the outer faces of the wall defining the tubular body of the crystallizer, which typically has a solid copper thickness of about 15 to 30 millimeters. A plurality of longitudinal grooves is obtained in this thickness, which grooves are closed externally by means of metal plates and/or by electrolytic copper deposits to define the aforesaid channels.

In these types of crystallizers, the longitudinal cooling channels are part of a closed circuit in which a cooling liquid, such as water, suitable for removing heat from the cast product, is circulated.

Among the monolithic crystallizers, there is a subset identified as "tubular" crystallizers; in this case, there are no cooling channels made by drilling or milling, and the water flows on the outer surface of the crystallizer wall. A steel outer jacket is used to create the meatus in which the water can pass. This type of crystallizer has a wall thickness, which is typically one-tenth the size of the cast product (which has the shape of a regular polygon).

Crystallizers, both monolithic and of the plate type, having cooling channels (obtained by drilling or milling) are more efficient than tubular crystallizers in removing the considerable heat resulting from steel solidification.

However, monolithic crystallizers having cooling channels obtained by drilling are rather expensive to make, due prevalently to the amount of copper they employ, which is about twice as much as that required in tubular monolithic crystallizers. Furthermore, making the circular through holes is more expensive than making the outer millings, given the difficulty in producing very long holes. Disadvantageously, however, in the monolithic crystallizers with cooling channels obtained by milling, the cooling liquid pressure is not self-sustaining, as it is in the wall provided with circular through holes, and this pressure is discharged on the structure affecting the operating deformation thereof.

The operating deformation of the aforesaid monolithic crystallizers with cooling channels consists of two components, i.e., thermal and hydraulic. Given that the taper is set during the production of the crystallizer, in operation, the crystallizer may undergo the modification of the initial taper, which may vary more or less pronouncedly according to the various zones (meniscus, outlet). This poses a risk and can result in the occurrence of possible problems, ranging from surface defects on the cast product to the risk of breakout (i.e., rupture of the outer skin resulting in liquid steel spillage, which causes interruption of the casting process and damage to equipment). Therefore, a good crystallizer needs to be able to limit the operating deformation to the greatest extent so that it is not subject to excessive changes compared to the design taper, so as not to decrease its service life and allow quality production over time.

The thermal component increases with the temperature difference between the hot, inner face and the cold, outer face of the crystallizer wall, said temperature difference, in turn, decreasing as the distance between the cooling channels, which convey the cooling liquid, and the hot face or inner face of the crystallizer decreases. For the same type of steel, lubrication and casting speed, a crystallizer consisting of thinner walls allows a greater heat exchange than a crystallizer with thicker walls, given the greater proximity between the cooling liquid and the liquid steel, reducing the aforesaid thermal component and allowing for higher speed casting.

On the other hand, the opposite occurs for the hydraulic deformation component, because it decreases as a function of the thickness of the crystallizer raised to an exponent close to three, whereby the effect is greatly dampened above a given thickness.

Disadvantageously, in the known monolithic crystallizers provided with cooling channels, the thermal component of the operating deformation cannot be limited even by partially increasing the thickness, although less deformation due to the hydraulic component is guaranteed.

The need for an innovative crystallizer capable of solving the aforesaid drawbacks is thus felt.

Examples of crystallizers for continuous casting are described in EP3013498B1 and in US7422049B2.

### Summary of the invention

It is an object of the present invention is to make a continuous casting crystallizer with structural and dimensional features that make it possible to optimally contain both the thermal component and the hydraulic component of the operating deformation of the crystallizer.

It is another object of the present invention to make a crystallizer for continuous casting which has high structural rigidity while decreasing its wall thickness compared to some known crystallizers, so as to ensure high casting efficiency and high quality of the product exiting the crystallizer.

It is a further object of the present invention to make a continuous casting crystallizer, which is constructively simple and at the same time has a reduced cost compared to known crystallizers, by minimizing the use of metal, e.g., copper, required to make the tubular body wall.

The present invention achieves at least one of such objects, and the other objects which will be apparent in light of the present description, by means of a continuous casting crystallizer comprising:
a tubular body defining a longitudinal axis X and having a wall with at least one inner face which defines a longitudinal through casting cavity,
a plurality of longitudinal grooves produced on at least one portion of an outer surface of said wall and open towards the outside thereof, the production of said plurality of longitudinal grooves defining a corresponding plurality of longitudinal fins on the tubular body,
a covering bandage made of composite material wound directly about the outer surface of said wall to close said longitudinal grooves forming corresponding longitudinal cooling channels adapted to make a cooling liquid flow therein,
wherein the portion of the outer surface of said wall occupied by said longitudinal grooves and said longitudinal fins is at least 70% of said outer surface,
and wherein the width of the longitudinal grooves, which corresponds to the width of the longitudinal cooling channels, is greater than the width of the longitudinal fins.

A second aspect of the invention instead relates to a process for making the above continuous casting crystallizer comprising the following steps:
- manufacturing a tubular body defining a longitudinal axis X and having a wall with at least one inner face defining a longitudinal through casting cavity,
- manufacturing a plurality of longitudinal grooves on at least a portion of an outer surface of said wall, the manufacturing of said plurality of longitudinal grooves by defining a corresponding plurality of longitudinal fins on the tubular body,
- non-removably winding a covering winding made of composite material directly about the outer surface of said wall to close said longitudinal grooves and define corresponding longitudinal cooling channels.

The crystallizer of the invention has the following advantages:
- excellent maintenance of the internal taper of the crystallizer both when cold and when hot;
- ease of use of the crystallizer, without any contraindications, in conjunction with an electromagnetic stirrer, called a stirrer;
- maximization of the efficiency of any radioactive rod associated with the crystallizer and used to detect the level of liquid metal inside the crystallizer during casting, the covering winding being transparent to radiation;
- cost containment in the manufacture of crystallizers of any shape, i.e., with any cross-section, e.g., polygonal, circular, or elliptical, and also of considerable size, e.g., with diameters, or widths, equal to or greater than 800 mm;
- reducing the thickness of the wall which defines the tubular body of the crystallizer and, thus, a limited use of the metal, e.g., copper, from which said tubular body is made;
- extension of the life of the crystallizer;
- improving the quality of the cast product;
- ability to work on the solidified covering winding with machine tools, e.g., to define grooves for seal rings or holes for inserting safety pins.

Further features and advantages of the invention will become more apparent in the light of the detailed description of exemplary but not exclusive embodiments.

The dependent claims describe particular embodiments of the invention.

### Brief description of the drawings

The description of the invention refers to the accompanying drawings, which are provided by way of non-limiting example, in which:
Figure 1 is a perspective view of a first embodiment of a crystallizer according to the invention;
Figure 2 is an enlargement of part of the crystallizer in Figure 1;
Figure 3 is a cross-section view of a variant of the first embodiment of the crystallizer in Figure 1;
Figure 4 is a cross-section view of part of a second embodiment of the crystallizer according to the invention;
Figure 5 is an enlargement of part of the cross-section view in Figure 4 or Figure 6;
Figure 6 is a cross-section view of part of a third embodiment of the crystallizer according to the invention.

The same reference numerals and letters in the drawings identify the same elements or components.

### Description of exemplary embodiments of the invention

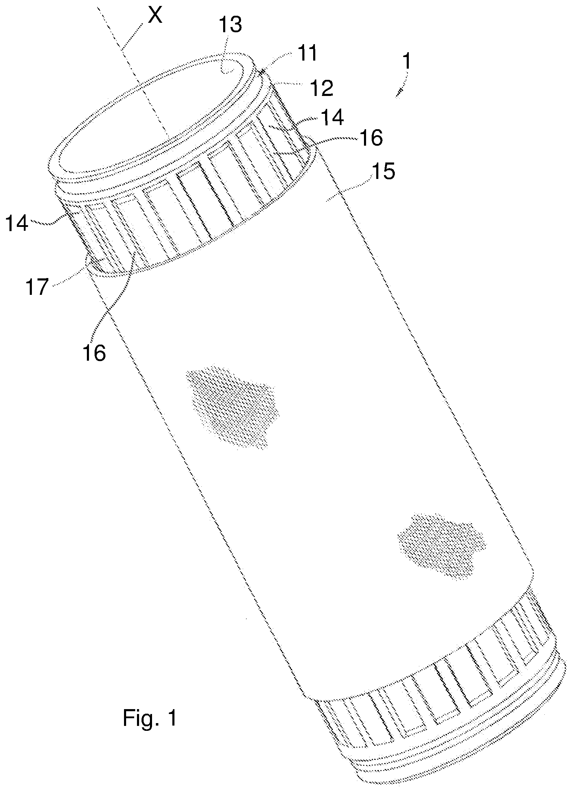

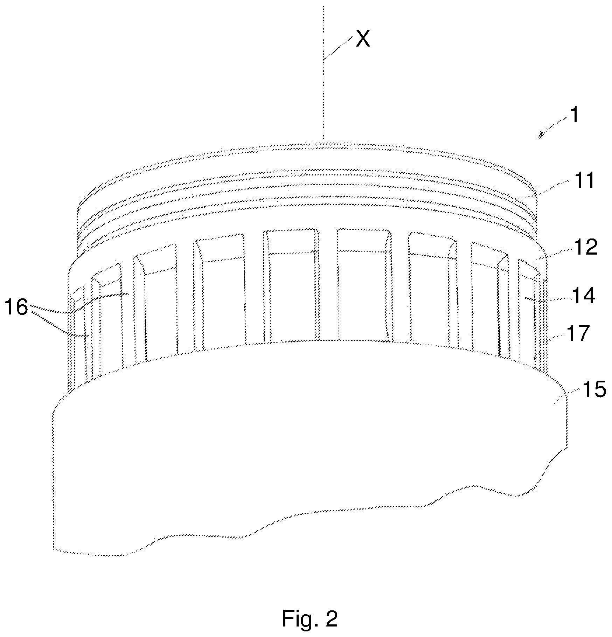

Some examples of a crystallizer for continuous casting according to the invention are shown with reference to Figures 1-6. In all embodiments of the invention, the crystallizer comprises:
- a tubular body 11 defining a longitudinal axis X and having at least one wall 12, which defines a longitudinal through casting cavity 13,
- a plurality of longitudinal grooves 14 made on at least one portion of an outer surface of said wall 12 and open towards the outside thereof,
- a plurality of longitudinal fins 16 provided externally on the tubular body 11, obtained as a consequence of making the plurality of longitudinal grooves 14, each longitudinal fin 16 delimiting two mutually adjacent longitudinal grooves,
- a covering winding 15 made of a composite material wound, in a manner not removable under operating conditions, directly about the outer surface of said wall 12, preferably resting on the end or outer edge of the longitudinal fins 16 so as to close the longitudinal grooves 14 forming corresponding longitudinal cooling channels 17 adapted to make a cooling liquid flow therein, e.g., water.

The outer surface of the wall 12 can comprise one or more outer faces according to the shape of the cross-section of said wall.

The longitudinal grooves 14 are recesses of limited depth and width, and of greater development in length, i.e., longitudinally along the axis X. As a consequence, the longitudinal fins are protrusions of limited height (considering the dimension which protrudes from the base of the tubular body) and width (i.e., fin thickness), and of greater development in length along the axis X.

Advantageously, the portion of the outer surface of the wall 12 occupied by the longitudinal grooves 14 and the longitudinal fins 16 is at least 70% of the outer surface, preferably at least 80% of said outer surface, and the width of the longitudinal grooves 14, which corresponds to the width of longitudinal cooling channels 17, is greater than the width of longitudinal fins 16, i.e., greater than the thickness of said longitudinal fins. These features, in combination with the above-described structure of the crystallizer, surprisingly make it possible to optimally contain both the thermal component and the hydraulic component of the operating deformation of the crystallizer.

In a first variant, the width of the longitudinal grooves 14 is comprised in a range from 2 to 7 mm, and the width of the longitudinal fins 16 is comprised in a range from 0.5 to 5 mm.

In a second variant, the width of the longitudinal grooves 14 is comprised in a range from 3 to 5 mm, and the width of the longitudinal fins 16 is comprised in a range from 1 to 2.5 mm.

Preferably, providing a width of the longitudinal grooves 14 at least twice the width of the longitudinal fins 16 leads to a further improvement in containing the operating deformation.

Advantageously, as shown from the figures, all the longitudinal fins 16 on the tubular body 11 are mutually equal. Therefore, both the shape and size of the longitudinal fins 16 are the same.

This feature makes the production of the tubular body 11 very simple and quick, compared to well-known crystallizers which involve alternating, along the outer perimeter of their tubular body, two types of fins. A first type of longitudinal fin is shaped to connect the tubular body of the crystallizer with an outer support shell or with outer support plates. A second type of longitudinal fin is shaped simply to act as a support with said outer support shell or said outer support plates. This known solution does not allow for an optimal seal, because the cooling liquid can leak from one longitudinal cooling channel to the adjacent one, varying the desired water pressure for each cooling channel. Furthermore, the use of different longitudinal fins complicates the assembly between the inner tubular body and the outer shell and involves special construction needs, at least for the inner tubular body because the machine making said inner tubular body must produce two different fin profiles.

Even more preferably, the width of the longitudinal grooves 14 is at least twice the width of a longitudinal fin 16 but still less than four times or three times the width of said longitudinal fin in order to maintain a structure of the cooling channels 17 which prevents wall deformations resulting from the pressure of the cooling liquid.

In a variant example, the total thickness of the tubular body 11 is comprised in a range, e.g., from 18 to 22 mm, including the depth of the longitudinal cooling channels 17, i.e., the height of the longitudinal fins 16. Preferably, for example, the latter can be comprised in a range from 3 to 10 mm, preferably in a range from 4 to 6 mm. Advantageously, the combination of a depth of the longitudinal cooling channels 17, i.e. the height of the longitudinal fins 16, in the range from 4 to 6 mm with a total thickness of the tubular body 11 comprised in the range from 18 to 22 mm determines a residual wall thickness of the tubular body in the region of the cooling channels in the range from 12 to 18 mm. Surprisingly, although crystallizers with residual wall thickness of value less than 12 mm are known, this combination makes it possible to limit also the thermal component of the operating deformation very well, in addition to effectively limiting the hydraulic component by virtue of increased structural rigidity.

Optionally, the longitudinal extension of the tubular body 11 is comprised in a range from 700 to 1200 mm.

Preferably, the tubular body 11 is made of copper or copper alloy. In a preferred variant, the tubular body 11 is made of Cu-Ag alloy.

Figures 1-3 show a first embodiment of the crystallizer for continuous casting according to the invention, having the wall 12 of the tubular body 11 with round cross-section, thus defining a longitudinal through casting cavity 13 with a circular cross-section.

In this case, the longitudinal grooves 14 are made at least on part of the single outer face of the wall 12 and are open to the outside thereof.

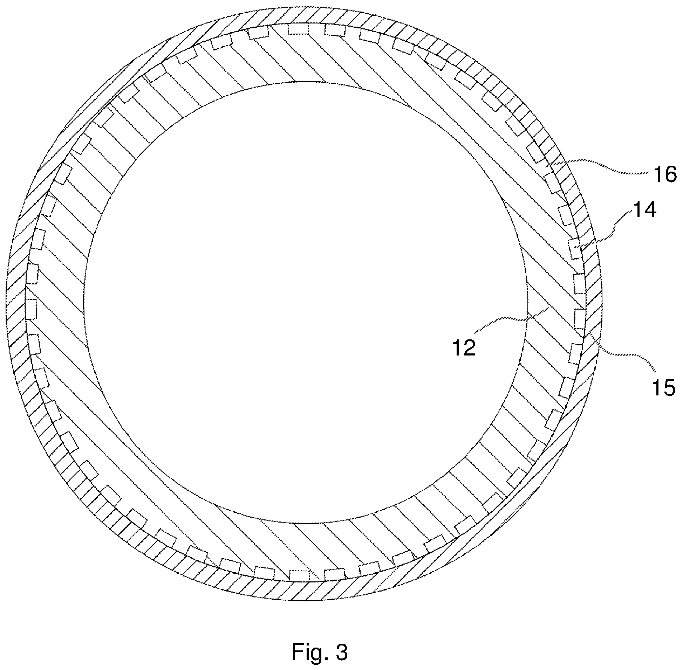

In this first embodiment, the portion of the outer face of the wall 12 occupied by the longitudinal grooves 14 and the longitudinal fins 16 is at least 90% of the outer surface area. In the variant of Figure 3, 100% of the outer face of the wall 12 is occupied by the longitudinal grooves 14 and the longitudinal fins 16.

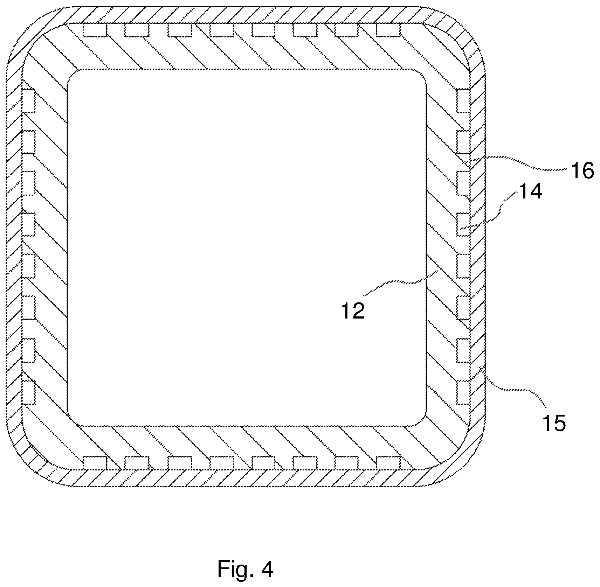

Figure 4 shows a second embodiment of the crystallizer for continuous casting according to the invention, having the wall 12 of the tubular body 11 with square cross-section, preferably with inner and outer corners appropriately connected, thus defining a longitudinal through casting cavity 13 with a substantially square cross-section.

In this case, the longitudinal grooves 14 are made on at least part of the four outer faces of the wall 12 and open outwards.

In this second embodiment, the portion of the outer surface area of the wall 12 occupied by the longitudinal grooves 14 and the longitudinal fins 16 is at least 70%, preferably at least 80%, of the outer surface area. In particular, at least 70%, preferably at least 80%, of each outer face of the wall 12 is occupied by the longitudinal grooves 14 and the longitudinal fins 16.

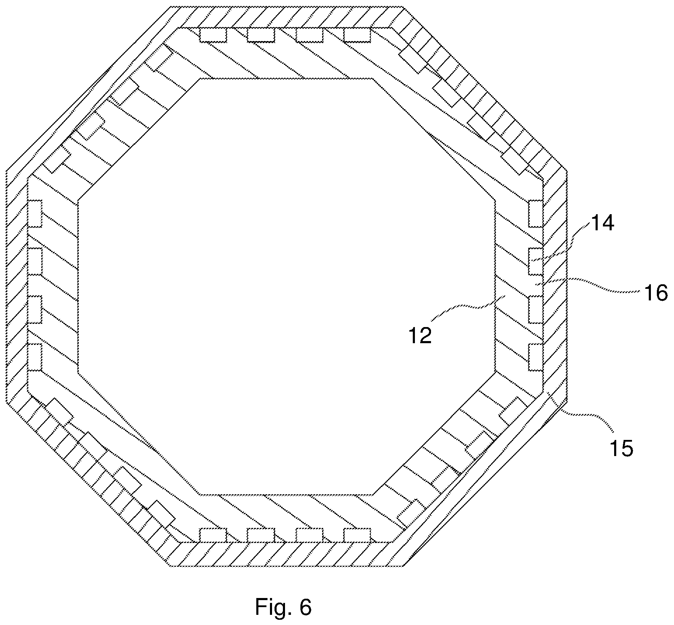

Figure 6 shows a third embodiment of the crystallizer for continuous casting according to the invention, having the wall 12 of the tubular body 11 with octagonal cross-section, preferably with inner and outer corners which can be appropriately connected, thus defining a longitudinal through casting cavity 13 with a substantially octagonal cross-section.

In this case, the longitudinal grooves 14 are made on at least part of the eight outer faces of the wall 12 and open outwards.

In this third embodiment, the portion of the outer surface area of the wall 12 occupied by the longitudinal grooves 14 and the longitudinal fins 16 is at least 70%, preferably at least 80%, of the outer surface area. In particular, at least 70%, preferably at least 80%, of each outer face of the wall 12 is occupied by the longitudinal grooves 14 and the longitudinal fins 16.

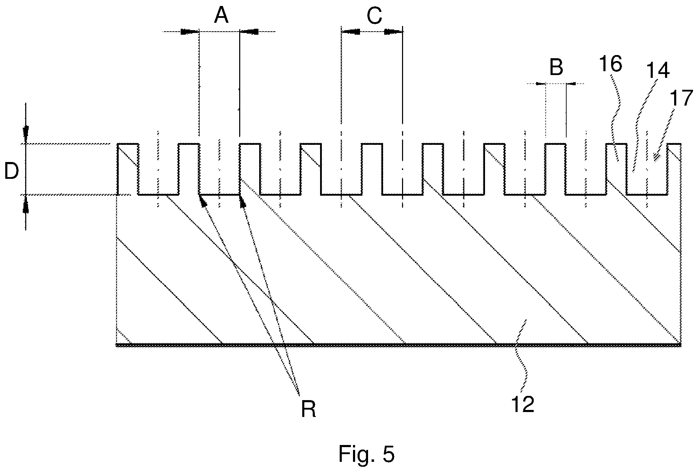

In the example in Figure 5, which refers to the variants in Figure 4 and Figure 6, the width A of the longitudinal grooves 14 is about twice the width B of the longitudinal fins 16, whereby the pitch C of the grooves 14 is about three times the width B. Further, in Figure 5, reference letter D indicates the depth of the cooling channels 17 coincident with the height of the longitudinal fins 16.

The same proportion between the width A of the longitudinal grooves 14 and the width B of the longitudinal fins 16 applies to the variant in Figure 3.

In all the embodiments of the crystallizer of the invention, the covering winding 15 can comprise one or more overlapping layers of composite material made using fiber-impregnated, or prepreg, with a polymeric material. The winding of these layers on the outer surface of the wall 12 is of the non-removable type under operating conditions in order to create an inseparable whole between the wall 12, provided with longitudinal grooves 14 and longitudinal fins 16, and the covering winding 15.

Obviously, once worn, the covering winding 15 can be removed and replaced.

Once the covering winding 15 has been wound around the outer surface of the wall 12, in particular resting on the tops or ends of the longitudinal fins 16, the polymeric material is cured and determines the integral and immovable fixing of the covering winding to the wall.

This makes it possible to obtain a crystallizer for continuous casting which maintains further unchanged the design taper, both when hot and when cold, by virtue of the reinforcement structure that the aforesaid outer covering winding forms for the wall of the crystallizer.

Indeed, the covering winding 15, by tightening the crystallizer with a prevalent direction transverse to its longitudinal development, limits deformation and displacement of the wall, maintaining the inner taper, while allowing longitudinal expansion, due to thermal phenomena, e.g., between 0 and 4 mm.

The thickness of said covering winding 15 can be constant or variable along the longitudinal extension of the tubular body 11 increasing at the areas most stressed by strains. In particular, this thickness can be maximum at the area of the tubular body 11 where the meniscus of the molten metal is provided in order to reduce the internal taper variation of the crystallizer around this area. Indeed, mainly in this area, there is a tendency for outward expansion due to the thermal stress resulting from the contact temperature between the liquid steel and the wall of the crystallizer. This would lead to a reduction in the taper between the meniscus and the upper inlet section of the crystallizer, and to a taper greater than the design taper in the lower stretch of the crystallizer, again with respect to the meniscus area. This would result in a deterioration in the quality of the cast product due to the altering of the operating conditions and the consequent poor thermal conduction between the steel skin and the cooled face of the wall of the crystallizer itself. Therefore, increasing the thickness of the covering winding 15 at the meniscus zone decreases the likelihood of the breakout of liquid steel from the skin, as a result of the reduced local heat removal which causes thinning of the skin accompanied by an increase in temperature, as well as sticking of the skin to the inner face, or inner faces, of the crystallizer wall.

The variation in the thickness of the covering winding 15 along the longitudinal extension of the tubular body 11 can be as little as a few millimeters. By way of example only, the covering winding 15, in the non-thickened zone, has a thickness comprised between 1 and 10 mm.

The variable thickness of the composite material layers surrounding the tubular body allows, after complete polymerization of the covering winding, working the outer containing surface using machine tools in order to obtain housings to accommodate gaskets or safety pins.

In particular, the aforementioned covering winding 15 comprises at least one layer made using at least one impregnated, or pre-impregnated fiber, with, e.g., a volumetric ratio of 60 % fiber, and 40 % glue or polymer resin.

The polymer material is of the high-temperature resistant type, i.e., equal to, or above, 100°C, and is chosen from the group comprising polyamide, epoxy, or polyester resins.

The fibers can be chosen from a group comprising carbon fibers, glass fibers, aramid fibers, or the like.

The covering winding 15, which becomes rigid when the polymer solidifies by curing, can be applied using any known technique, including filament winding.

The polymerization of the polymer can occur through steps of thermal polymerization, i.e., cross-linking of the resin, known as curing.

During the step of curing, the crystallizer is heated to a temperature comprised between 30°C and 120°C and maintained at this temperature for a time comprised between 20 and 200 minutes. These conditions determine the cross-linking of the polymer resin and thus an integral fixing of the covering winding 15 to the wall 12 of the tubular body 11. This provides better strength and thermal consolidation characteristics according to the type of resin applied.

In possible embodiments, after the step of curing, a step of post-curing may be provided during which the crystallizer is heated to a temperature comprised between 80°C and 200°C and maintained at this temperature for a time comprised between 1 hour and 20 hours, giving an improvement of the mechanical properties.

In possible implementation solutions, the crystallizer is kept rotating around its own axis throughout all the steps of curing and/or post-curing.

The rotation allows to obtain more uniform characteristics across the entire covering winding 15.

According to a possible variant, the crystallizer, after the steps of curing and possibly post-curing, can undergo forced cooling.

The operation of winding the covering winding 15 on the wall 12 can comprise the installation of the tubular body 11 on an appropriate apparatus and by means of dedicated equipment, in order to make the tubular body rotating about a rotation axis and the subsequent winding of the covering winding perpendicular to the longitudinal development axis, or at a winding angle comprised between 0° and 10°, preferably between 0° and 5°, relative to the perpendicular to the longitudinal development axis of the crystallizer.

The winding operation can take place with a controlled fiber tension, such as from 1 N to 50 N per fiber.

## Claims

1. A crystallizer for continuous casting comprising
a tubular body (11) defining a longitudinal axis X and having a wall (12) with at least one inner face defining a longitudinal through casting cavity (13),
a plurality of longitudinal grooves (14) produced on at least a portion of an outer surface of said wall (12) and open towards the outside thereof, the production of said plurality of longitudinal grooves (14) defining a corresponding plurality of longitudinal fins (16) on the tubular body (11),
a covering winding (15) made of composite material wound directly about the outer surface of said wall (12) to close said longitudinal grooves (14) forming corresponding longitudinal cooling channels (17) adapted to make a cooling liquid flow therein,
wherein the portion of the outer surface of said wall (12) occupied by said longitudinal grooves (14) and said longitudinal fins (16) is at least 70% of said outer surface,
**characterized in that** the width of the longitudinal grooves (14), which corresponds to the width of the longitudinal cooling channels (17), is greater than the width of the longitudinal fins (16).

2. A crystallizer according to claim 1, wherein the width of the longitudinal grooves (14) is comprised in a range from 2 to 7 mm, and the width of the longitudinal fins (16) is comprised in a range from 0,5 to 5 mm.

3. A crystallizer according to claim 2, wherein the width of the longitudinal grooves (14) is comprised in a range from 3 to 5 mm, and the width of the longitudinal fins (16) is comprised in a range from 1 to 2,5 mm.

4. A crystallizer according to any one of the preceding claims, wherein the width of the longitudinal grooves (14) is at least twice the width of the longitudinal fins (16) and preferably less than four times or three times the width of the longitudinal fins (16).

5. A crystallizer according to any one of the preceding claims, wherein the depth of the longitudinal cooling channels (17) is comprised in a range from 3 to 10 mm, preferably in a range from 4 to 6 mm.

6. A crystallizer according to any one of the preceding claims, wherein the tubular body (11) is made of copper or copper alloy, preferably made of Cu-Ag alloy.

7. A crystallizer according to any one of the preceding claims, wherein the total thickness of the tubular body (11) is comprised in a range from 18 to 22 mm.

8. A crystallizer according to any one of the preceding claims, wherein said covering winding (15) comprises one or more layers (15) made of composite material made using fiber-impregnated, or pre-impregnated, with a polymeric material.

9. A crystallizer according to any one of the preceding claims, wherein the thickness of said covering winding (15) is constant along the longitudinal extension of the tubular body (11) or is maximum at the area of the tubular body (11) where the meniscus of the molten metal is provided.

10. A crystallizer according to any one of the preceding claims, wherein the longitudinal extension of the tubular body (11) is comprised in a range from 700 to 1200 mm.

11. A crystallizer according to any one of the preceding claims, wherein said longitudinal fins (16) on the tubular body (11) are mutually equal.

12. A process for making a continuous casting crystallizer according to any one of the preceding claims, the method comprising the following steps:
- manufacturing a tubular body (11) defining a longitudinal axis X and having a wall (12) with at least one inner face defining a longitudinal through casting cavity (13),
- manufacturing a plurality of longitudinal grooves (14) on at least a portion of an outer surface of said wall (12), the manufacturing of said plurality of longitudinal grooves (14) defining a corresponding plurality of longitudinal fins (16) on the tubular body (11),
- non-removably winding a covering winding (15) made of composite material directly about the outer surface of said wall (12) to close said longitudinal grooves (14) and define corresponding longitudinal cooling channels (17).

13. A process according to claim 12, wherein the winding of the covering winding (15) comprises winding one or more overlapping layers of composite material, manufactured using fiber impregnated, or prepreg, with a polymeric material, said layers resting on the tops or ends of the longitudinal fins (16).

14. A process according to claim 13, wherein, after winding said one or more overlapping layers, a step of curing is provided during which the crystallizer is heated to a temperature between 30°C and 120°C and maintained at said temperature for a time comprised between 20 and 200 minutes;
preferably wherein after said step of curing, a step of post-curing is provided during which the crystallizer is heated to a temperature comprised between 80°C and 200°C and maintained at said temperature for a time comprised between 1 hour and 20 hours.

15. A process according to any one of claims 11 to 14, wherein said covering winding (15) is applied using the filament winding technique.

## Patentansprüche

1. Kristallisator zum Stranggießen, umfassend
einen rohrförmigen Körper (11), der eine Längsachse X definiert und eine Wand (12) mit mindestens einer Innenfläche aufweist, die einen längs verlaufenden durchgehenden Gusshohlraum (13) definiert,
eine Vielzahl von Längsnuten (14), die auf mindestens einem Abschnitt einer Außenfläche der Wand (12) ausgebildet sind und in Richtung deren Außenseite offen sind, wobei die Ausbildung der Vielzahl von Längsnuten (14) eine entsprechende Vielzahl von Längsrippen (16) auf dem rohrförmigen Körper (11) definiert,
eine Abdeckwicklung (15), die aus einem Verbundmaterial besteht, das direkt um die Außenfläche der Wand (12) gewickelt ist, um die Längsnuten (14) zu verschließen, die entsprechende Längskühlkanäle (17) bilden, die so ausgelegt sind, dass eine Kühlflüssigkeit darin strömen kann,
wobei der Abschnitt der Außenfläche der Wand (12), der von den Längsnuten (14) und den Längsrippen (16) eingenommen wird, mindestens 70 % der Außenfläche ausmacht,
**dadurch gekennzeichnet, dass** die Breite der Längsnuten (14), die der Breite der Längskühlkanäle (17) entspricht, größer ist als die Breite der Längsrippen (16).

2. Kristallisator nach Anspruch 1, wobei die Breite der Längsnuten (14) in einem Bereich von 2 bis 7 mm liegt und die Breite der Längsrippen (16) in einem Bereich von 0,5 bis 5 mm liegt.

3. Kristallisator nach Anspruch 2, wobei die Breite der Längsnuten (14) in einem Bereich von 3 bis 5 mm liegt und die Breite der Längsrippen (16) in einem Bereich von 1 bis 2,5 mm liegt.

4. Kristallisator nach einem der vorhergehenden Ansprüche, wobei die Breite der Längsnuten (14) mindestens das Doppelte der Breite der Längsrippen (16) beträgt und vorzugsweise weniger als das Vierfache oder Dreifache der Breite der Längsrippen (16) beträgt.

5. Kristallisator nach einem der vorhergehenden Ansprüche, wobei die Tiefe der Längskühlkanäle (17) in einem Bereich von 3 bis 10 mm, vorzugsweise in einem Bereich von 4 bis 6 mm, liegt.

6. Kristallisator nach einem der vorhergehenden Ansprüche, wobei der rohrförmige Körper (11) aus Kupfer oder einer Kupferlegierung, vorzugsweise aus einer Cu-Ag-Legierung, besteht.

7. Kristallisator nach einem der vorhergehenden Ansprüche, wobei die Gesamtdicke des rohrförmigen Körpers (11) in einem Bereich von 18 bis 22 mm liegt.

8. Kristallisator nach einem der vorhergehenden Ansprüche, wobei die Abdeckwicklung (15) eine oder mehrere Schichten (15) umfasst, die aus einem Verbundmaterial bestehen, das unter Verwendung von Fasern, die mit einem Polymermaterial imprägniert oder vorimprägniert sind, hergestellt wird.

9. Kristallisator nach einem der vorhergehenden Ansprüche, wobei die Dicke der Abdeckwicklung (15) entlang der Längserstreckung des rohrförmigen Körpers (11) konstant ist oder an dem Bereich des rohrförmigen Körpers (11), an dem der Wulstrand der Metallschmelze vorgesehen ist, maximal ist.

10. Kristallisator nach einem der vorhergehenden Ansprüche, wobei die Längserstreckung des rohrförmigen Körpers (11) in einem Bereich von 700 bis 1200 mm liegt.

11. Kristallisator nach einem der vorhergehenden Ansprüche, wobei die Längsrippen (16) an dem rohrförmigen Körper (11) einander gleich sind.

12. Verfahren zum Herstellen eines Strangguss-Kristallisators nach einem der vorhergehenden Ansprüche, wobei das Verfahren die folgenden Schritte umfasst:
- Fertigen eines rohrförmigen Körpers (11), der eine Längsachse X definiert und eine Wand (12) mit mindestens einer Innenfläche aufweist, die einen längs verlaufenden durchgehenden Gusshohlraum (13) definiert,
- Fertigen einer Vielzahl von Längsnuten (14) auf mindestens einem Abschnitt einer Außenfläche der Wand (12), wobei das Fertigen der Vielzahl von Längsnuten (14) eine entsprechende Vielzahl von Längsrippen (16) auf dem rohrförmigen Körper (11) definiert,
- nicht ablösbares Wickeln einer Abdeckwicklung (15), die aus einem Verbundmaterial besteht, direkt um die Außenfläche der Wand (12), um die Längsnuten (14) zu verschließen und entsprechende Längskühlkanäle (17) zu definieren.

13. Verfahren nach Anspruch 12, wobei das Wickeln der Abdeckwicklung (15) das Wickeln einer oder mehrerer überlappender Schichten aus Verbundmaterial umfasst, die unter Verwendung von Fasern, die mit einem Polymermaterial imprägniert oder vorimprägniert sind, gefertigt wird, wobei die Schichten auf den Oberseiten oder den Enden der Längsrippen (16) aufliegen.

14. Verfahren nach Anspruch 13, wobei nach dem Wickeln der einen oder mehreren Schichten ein Schritt des Aushärtens vorgesehen ist, während dessen der Kristallisator auf eine Temperatur zwischen 30 °C und 120 °C erwärmt wird und für eine Zeit zwischen 20 und 200 Minuten bei dieser Temperatur gehalten wird;
wobei nach dem Schritt des Aushärtens vorzugsweise ein Schritt des Nachhärtens vorgesehen ist, während dessen der Kristallisator auf eine Temperatur zwischen 80 °C und 200 °C erwärmt wird und für eine Zeit zwischen 1 Stunde und 20 Stunden bei dieser Temperatur gehalten wird.

15. Verfahren nach einem der Ansprüche 11 bis 14, wobei die Abdeckwicklung (15) unter Verwendung der Filamentwicklungstechnik aufgebracht wird.

## Revendications

1. Cristalliseur pour coulée continue comprenant :
un corps tubulaire (11) définissant un axe longitudinal X et ayant une paroi (12) avec au moins une face intérieure définissant une cavité de coulée longitudinale traversante (13),
une pluralité de rainures longitudinales (14) réalisées sur au moins une portion d'une surface extérieure de ladite paroi (12) et ouvertes vers l'extérieur de celle-ci, la réalisation de ladite pluralité de rainures longitudinales (14) définissant une pluralité correspondante d'ailettes longitudinales (16) sur le corps tubulaire (11),
un enroulement de couverture (15) réalisé en matériau composite enroulé directement autour de la surface extérieure de ladite paroi (12) pour fermer lesdites rainures longitudinales (14) formant des canaux de refroidissement longitudinaux correspondants (17) adaptés pour y faire circuler un liquide de refroidissement,
dans lequel la portion de la surface extérieure de ladite paroi (12) occupée par lesdites rainures longitudinales (14) et lesdites ailettes longitudinales (16) représente au moins le 70 % de ladite surface extérieure,
**caractérisé en ce que** la largeur des rainures longitudinales (14), qui correspond à la largeur des canaux de refroidissement longitudinaux (17), est supérieure à la largeur des ailettes longitudinales (16).

2. Cristalliseur selon la revendication 1, dans lequel la largeur des rainures longitudinales (14) est comprise dans une plage de 2 à 7 mm, et la largeur des ailettes longitudinales (16) est comprise dans une plage de 0,5 à 5 mm.

3. Cristalliseur selon la revendication 2, dans lequel la largeur des rainures longitudinales (14) est comprise dans une plage de 3 à 5 mm, et la largeur des ailettes longitudinales (16) est comprise dans une plage de 1 à 2,5 mm.

4. Cristalliseur selon l'une quelconque des revendications précédentes, dans lequel la largeur des rainures longitudinales (14) est au moins deux fois la largeur des ailettes longitudinales (16) et de préférence inférieure à quatre fois ou trois fois la largeur des ailettes longitudinales (16).

5. Cristalliseur selon l'une quelconque des revendications précédentes, dans lequel la profondeur des canaux de refroidissement longitudinaux (17) est comprise dans une plage de 3 à 10 mm, de préférence dans une plage de 4 à 6 mm.

6. Cristalliseur selon l'une quelconque des revendications précédentes, dans lequel le corps tubulaire (11) est réalisé en cuivre ou en alliage de cuivre, de préférence en alliage Cu-Ag.

7. Cristalliseur selon l'une quelconque des revendications précédentes, dans lequel l'épaisseur totale du corps tubulaire (11) est comprise dans une plage de 18 à 22 mm.

8. Cristalliseur selon l'une quelconque des revendications précédentes, dans lequel ledit enroulement de couverture (15) comprend une ou plusieurs couches (15) réalisés en matériau composite formé à partir de fibres imprégnées, ou préimprégnées, d'un matériau polymère.

9. Cristalliseur selon l'une quelconque des revendications précédentes, dans lequel l'épaisseur dudit enroulement de couverture (15) est constante le long de l'extension longitudinale du corps tubulaire (11) ou est maximale à la zone du corps tubulaire (11) où le ménisque du métal fondu est prévu.

10. Cristalliseur selon l'une quelconque des revendications précédentes, dans lequel l'extension longitudinale du corps tubulaire (11) est comprise dans une plage de 700 à 1200 mm.

11. Cristalliseur selon l'une quelconque des revendications précédentes, dans lequel lesdites ailettes longitudinales (16) sur le corps tubulaire (11) sont mutuellement égales.

12. Procédé de fabrication d'un cristalliseur pour coulée continue selon l'une quelconque des revendications précédentes, le procédé comprenant les étapes suivantes :
- fabriquer un corps tubulaire (11) définissant un axe longitudinal X et ayant une paroi (12) avec au moins une face intérieure définissant une cavité de coulée longitudinale traversante (13),
- fabriquer une pluralité de rainures longitudinales (14) sur au moins une portion d'une surface extérieure de ladite paroi (12), la fabrication de ladite pluralité de rainures longitudinales (14) définissant une pluralité correspondante d'ailettes longitudinales (16) sur le corps tubulaire (11),
- enrouler de manière inamovible un enroulement de couverture (15) réalisé en matériau composite directement autour de la surface extérieure de ladite paroi (12) pour fermer lesdites rainures longitudinales (14) et définir des canaux de refroidissement longitudinaux correspondants (17).

13. Procédé selon la revendication 12, dans lequel l'enroulement de l'enroulement de couverture (15) comprend l'enroulement d'une ou plusieurs couches de matériau composite se chevauchant, fabriquées en utilisant des fibres imprégnées ou préimprégnées, avec un matériau polymère, lesdites couches reposant sur les sommets ou les extrémités des ailettes longitudinales (16).

14. Procédé selon la revendication 13, dans lequel, après l'enroulement desdites un ou plusieurs couches se chevauchant, une étape de durcissement est prévue au cours de laquelle le cristalliseur est chauffé à une température entre 30°C et 120°C et maintenu à ladite température pendant une durée comprise entre 20 et 200 minutes ;
de préférence dans lequel après ladite étape de durcissement, une étape de post-durcissement est prévue au cours de laquelle le cristalliseur est chauffé à une température comprise entre 80°C et 200°C et maintenu à ladite température pendant une durée comprise entre 1 heure et 20 heures.

15. Procédé selon l'une quelconque des revendications 11 à 14, dans lequel ledit enroulement de couverture (15) est appliqué en utilisant la technique d'enroulement filamentaire.
